# EUROPÄISCHE PATENTSCHRIFT

(11) **EP 2 158 103 B1**
(45) Veröffentlichungstag und Bekanntmachung des Hinweises auf die Patenterteilung: **21.12.2011**
(21) Anmeldenummer: 08749358.1
(22) Anmeldetag: 07.05.2008
(51) Int. Cl.: B29C 65/02, B29C 69/00, B60K 15/03

(54) **KRAFTSTOFFBEHÄLTER**
FUEL TANK
RÉSERVOIR DE CARBURANT

(30) Priorität: 22.06.2007 DE 102007029261
(43) Veröffentlichungstag der Anmeldung: 03.03.2010
(73) Patentinhaber: Kautex Textron GmbH & Co. KG., 53229 Bonn (DE)
(72) Erfinder: EULITZ, Dirk, 53115 Bonn (DE)
(74) Vertreter: Polypatent
(86) Internationale Anmeldenummer: PCT/EP2008/003637
(87) Internationale Veröffentlichungsnummer: WO 2009/000362

(56) Entgegenhaltungen:
- EP-A- 0 792 767
- DE-A1- 3 600 177
- DE-A1- 10 047 938
- DE-A1- 10 136 650
- DE-A1- 10 327 738
- DE-U1- 20 110 549
- GB-A- 2 246 769
- GB-A- 2 390 582

## Beschreibung

Die Erfindung betrifft einen Kraftstoffbehälter aus thermoplastischem Kunststoff. Solche Kraftstoffbehälter lassen sich auf verschiedenste Art und Weise herstellen, beispielsweise durch Extrusionsblasformen, Thermoformen oder Spritzgießen. Bei der Herstellung von Kraftstoffbehältern durch Extrusionsblasformen kann der Behälter aus einem schlauchförmig extrudierten Vorformling aus plastifiziertem Kunststoff erhalten worden sein. Der Vorformling wird dann innerhalb eines zweiteiligen Werkzeugs unter Gasdruckbeaufschlagung aufgeweitet, wobei das Werkzeug die Außenkontur des fertig ausgeformten Behälters definiert. Alternativ ist es möglich, bahnförmige Vorformlinge zu extrudieren und diese unter Anwendung von Gasdruck und/oder Vakuum in einem hierfür vorgesehenen Werkzeug auszuformen.

Da bestimmte Kunststoffe für Kohlenwasserstoffe permeabel sind, sind bei der Herstellung von Kraftstoffbehältern aus thermoplastischem Kunststoff besondere Maßnahmen erforderlich, um deren Dichtigkeit zu gewährleisten. Üblicherweise werden moderne Kraftstoffbehälter aus Kunststoff aus mehrschichtigen Koextrudaten hergestellt, die Barriereschichten für Kohlenwasserstoffe enthalten. So stellt die Permeationsdichtigkeit der Behälterwandung in der Regel kein Problem dar. Schwachstellen im Hinblick auf mögliche Permeationsquellen stellen jedoch nach wie vor Nähte, Öffnungen mit Anschlussnippeln, Ventile oder dergleichen dar. Neben einer Einfüllöffnung müssen an einem Kraftstoffbehälter Entlüftungs- und Entnahmeöffnungen sowie Durchführungen für elektrische Leitungen vorgesehen sein. Schließlich ist es erforderlich, die im Kraftstoffbehälter angeordneten Aggregate, wie beispielsweise die Kraftstoffpumpe, mit elektrischer Energie zu versorgen. Ebenfalls aus Gründen verringerter Kohlenwasserstoffemissionen ist man bestrebt, möglichst viele Funktionsgruppen eine Kraftstoffbehälters, wie beispielsweise die Kraftstofffördereinheit, Ausgabebehälter und Kraftstoffdampffilter in das Innere des Behälters zu verlegen. Hierdurch wird eine beachtliche Reduzierung von Öffnungen in der Behälterwandung erreicht. Jede Öffnung oder Durchbrechung in der Behälterwandung stellt eine potentielle Leckagestelle dar. Im Stand der Technik sind deshalb zahllose Bemühungen beschrieben, die Anzahl der Öffnungen in der Behälterwandung zu minimieren bzw. deren Größe auf ein vernünftiges Maß zu beschränken.

Zahllose Veröffentlichungen befassen sich mit der Problematik die für die Kraftstofffördereinheit benötigte Öffnung in dem Behälter mit einem verhältnismäßig geringen Durchmesser auszuführen. Üblicherweise umfassen Kraftstofffördereinheiten eine Kraftstoffpumpe mit einem Elektromotor und ggf. einen Kraftstofffilter, die gemeinsam in einem Schwall- oder Schlingertopf angeordnet sind. Der Schwalltopf stellt sicher, dass die Kraftstoffpumpe in jeder Fahrsituation, d. h. bei Beschleunigung oder Kurvenfahrt oder starker Neigung des Fahrzeugs um die Quer- oder Längsachse ausreichend mit Kraftstoff versorgt ist. Darüber hinaus definiert der Schwalltopf auch bereits das Reservevolumen und ist noch mit wenigstens einem Füllstandsgeber versehen.

Der Minimierung des Aufnahmevolumens des Schwallbehälters sind Grenzen gesetzt, insbesondere bei stark motorisierten Kraftfahrzeugen. Zahllose Veröffentlichungen befassen sich daher damit, die Kraftstofffördereinheit modular auszugestalten, derart, dass diese in der Einbaulage auf dem Boden des Kraftstoffbehälters ein größeres Volumen beansprucht als im nichtmontierten Zustand. Auf diese Art und Weise lässt sich beispielsweise die Größe der zum Einsetzen der Kraftstofffördereinheit erforderlichen Revisionsöffnung verkleinern. Diese Revisionsöffnung dient auch zur Durchführung etwa erforderlicher Reparatur- oder Austauschmaßnahmen betreffend die Fördereinheit.

Schließlich ist es aus dem Stand der Technik bekannt, in dem Kraftstoffbehälter selbst Einziehungen vorzusehen, die mit einem Deckel oder einer Haube abdichtend verschlossen sind. Unter dem Deckel oder der Haube können dann die benötigten Öffnungen im Kraftstoffbehälter vorgesehen sein.

Aus der DE 196 00 872 ist ein Kraftstoffbehälter mit einer darin angeordneten Kraftstofffördereinrichtung bekannt, der eine Öffnung aufweist, durch die hydraulische und/oder elektrische Anschlussleitungen der Kraftstofffördereinrichtung nach außen geführt sind. Die Kraftstofffördereinrichtung wurde während des Herstellungsprozesses des Kraftstoffbehälters in diesen eingebracht und von dem einstückigen Kraftstoffbehälter umgeben. D. h., dass die Kraftstofffördereinheit bei Ausformung des Kraftstoffbehälters mit in diesen eingeblasen wurde. Deshalb kann der Kraftstoffbehälter eine Öffnung aufweisen, deren Durchmesser wesentlich geringer ist als die Abmessung der Kraftstofffördereinheit. In der DE 196 00 872 A1 wird vorgeschlagen, die Öffnung durch einen Stopfen abdichtend zu verschließen, wobei die Kraftstoffentnahmeleitung und elektrische Leitungen durch den die Öffnung verschließenden Stopfen hindurch geführt sind.

Abgesehen von der Kraftstoffentnahmeleitung und den elektrischen Leitungen für die im Kraftstoffbehälter befindlichen elektrischen Aggregate sind an dem Kraftstoffbehälter wenigstens noch Betriebs- und Betankungsentlüftungsleitungen vorzusehen. Hierfür müssten ebenfalls Durchführungen Im Behälter vorgesehen. Für dieses Problem zeigt die DE 196 00 872 keine Lösung auf.

Aus der DE 100 47 938 A1 ist ein Kraftstofftank nach Oberbegriff von Anspruch 1 bekannt. Dieser Kraftstofftank besteht aus zwei miteinander verschweißbaren Tankschalen aus Metall und einer im Tankinneren untergebrachten elektrisch betriebenen Kraftstofffördereinheit. Der Kraftstofftank ist darüber hinaus mit Durchführungen für zumindest eine metallische Kraftstoffleitung versehen.

Weitere Kraftstoffbehälter sind beispielsweise aus den Dokumenten DE 101 36 650 A1 und DE 103 27 738 A1 bekannt.

Der Erfindung liegt die Aufgabe zugrunde, einen Kraftstoffbehälter aus thermoplastischem Kunststoff bereitzustellen, bei welchem die Anzahl der benötigten Öffnungen in der Behälterwandung auf ein Minimum beschränkt ist.

Die Aufgabe wird gelöst durch einen Kraftstoffbehälter mit den Merkmalen des Anspruchs 1.

Der Kraftstoffbehälter gemäß der Erfindung kommt ohne die sonst üblichen Auskreisungen und Revisionsöffnungen aus. Auf diese Art und Weise bietet der Kraftstoffbehälter gemäß der Erfindung ein Minimum an potentiellen Leckagepfaden. Unter Leckage im Sinne der Erfindung ist nicht der sonst übliche Verlust an Flüssigkeit in sichtbarem Ausmaß gemeint, vielmehr sind hierunter Kohlenwasserstoffemissionen in einem kaum messbaren bzw. kaum wahrnehmbaren Bereich zu verstehen.

Eine bevorzugte Variante des Kraftstoffbehälters gemäß der Erfindung zeichnet sich dadurch aus, dass wenigstens eine der Fluidleitungen an ein die Behälterwandung unmittelbar durchsetzendes Anschlusselement angeschlossen ist. Ein solches Anschlusselement kann beispielsweise als Nippel mit einem tannenbaumförmigen Profil ausgebildet sein, der bei der Ausformung des Behälters die Behälterwandung durchstoßend oder durchsetzend mit der Behälterwandung verschweißt wurde.

Gemäß der Erfindung ist vorgesehen, dass zumindest ein Teil der aus dem Kraftstoffbehälter hinaus oder hinein geführten Fluidleitungen und/oder elektrischen Leitungen die Naht des Kraftstoffbehälters sich in einem Winkel zum Verlauf der Naht erstreckend durchsetzen und/oder mindestens teilweise durch die Einfüllöffnung und gegebenenfalls durch einen sich an die Einfüllöffnung anschließenden Einfüllstutzen geführt sind. Bei dieser Variante des Kraftstoffbehälters kann vorgesehen sein, dass mit Ausnahme der Einfüllöffnung keine Öffnungen oder Durchbrüche in der Behälterwandung vorgesehen sind.

Unter Behälterwandung im Sinne der Erfindung ist der ungestörte Wandbereich des Behälters zu verstehen, nicht hingegen jedoch die Nahtstelle, an der Abschnitte der Behälterwandung miteinander verschweißt sind. Der Behälter kann beispielsweise durch Thermoformen von zwei Halbschalten oder durch Zusammenfügen zweier spritzgegossener Halbschalen oder durch Extrusionsblasformen zweier bahnförmiger Vorformlinge erhalten werden. Durchführungen durch den Behälter im Bereich der Naht, die den Schichtaufbau der Behälterwandung nicht durchsetzen, sind im Sinne der Erfindung nicht als Durchbrüche durch die Wandung des Kraftstoffbehälters zu verstehen.

Der Kraftstoffbehälter gemäß einer Variante der Erfindung zeichnet sich insbesondere dadurch aus, dass mit Ausnahme der Einfüllöffnung eine gänzlich ungestörte und nicht durchbrochene Behälterwandung vorgesehen ist. Die Fluidleitungen und elektrischen Leitungen, die zum Betrieb des Kraftstoffbehälters unbedingt erforderlich sind, sind entweder durch die umlaufende Schweißnaht des Behälters oder durch den Einfüllstutzen des Behälters geführt.

Die Erfindung kann dahingehend zusammengefasst werden, dass die erforderlichen Durchführungen für Entnahme von Kraftstoff und Entlüftung des Behälters sowie für elektrische Leitungen in einem Bereich des Behälters angeordnet sind, der eine potentielle Leckagestelle darstellen kann, die sich herstellungsbedingt nicht vermeiden lässt. Bei Herstellung des Kraftstoffbehälters durch Extrusionsblasformen eines schlauchförmigen Vorformlings besitzt der Behälter eine umlaufende Quetschnaht im Bereich der Teilung der Werkzeughälften. Wird der Kraftstoffbehälter aus tiefgezogenen oder spritzgegossenen Halbschalen gefertigt, ergibt sich eine umlaufende Schweißnaht an einem flanschartig ausgebildeten umlaufenden Randbereich des Behälters. Schließlich kann der Kraftstoffbehälter gemäß der Erfindung auch aus bahn- oder bänderförmigen Extrudaten blasgeformt sein, wobei sich ebenfalls eine umlaufende Nahtstelle ergibt. Je nach Wahl des Herstellungsverfahrens wird die Technik zur Einbringung der Kraftstofffördereinheit und aller übrigen erforderlichen Einbauten in den Behälter unterschiedlich sein. Bei Herstellung des Kraftstoffbehälters aus einem extrusionsblasgeformten schlauchförmigen Vorformling kann beispielsweise die Kraftstofffördereinheit in bekannter Art und Weise umblasen worden sein. Bei allen anderen Varianten der Herstellung können die Kraftstofffördereinheit und alle anderen Einbauten vor dem Zusammenfügen der Schalen des Kraftstoffbehälters eingebracht worden sein.

Bei einer besonders bevorzugten Variante der Erfindung ist keine Revisionsöffnung vorgesehen und die in dem Kraftstoffbehälter vorgesehenen Funktionseinbauten sind auf die gesamte Lebensdauer des Kraftstoffbehälters ausgelegt.

Mit anderen Worten, erfindungsgemäß wird gänzlich auf Öffnungen verzichtet, durch die eine spätere Zugänglichkeit zum Inneren des Behälters zwecks Wartung oder Revision möglich wäre. Die Erfindung beschreitet daher einen ganz anderen Weg als der Stand der Technik.

Bei einer Variante des Kraftstoffbehälters nach der Erfindung ist vorgesehen, dass genau drei Fluidleitungen in den Kraftstoffbehälter hinein- oder herausgeführt sind. Die Begriffe "hinein" oder "heraus", wie sie in diesem Zusammenhang verwendet werden, beziehen sich auf das in der Leitung geführte Medium und sollen nicht den Verlauf der Leitung charakterisieren.

Vorzugsweise sind genau eine Einfüllleitung, genau eine Entlüftungsleitung und genau eine Kraftstoffentnahmeleitung vorgesehen. Die Entlüftungsleitung kann auch die Funktionalität Belüftung abdecken. Die Be- und Entlüftungsleitung sowie die Kraftstoffentnahmeleitung könnten innerhalb eines hierfür vorgesehenen Mantelrohrs durch den Einfüllstutzen verlegt sein. In diesem Mantelrohr könnten auch die benötigten elektrischen Leitungen aufgenommen werden.

Bei einer zweckmäßigen Ausgestaltung des Kraftstoffbehälters gemäß der Erfindung ist dieser aus wenigstens zwei Schalen zusammengesetzt, die jeweils im Bereich zur Naht einen flanschartigen Rand ausbilden.

Wenigstens eine der aus dem Kraftstoffbehälter hinaus oder in diesen hinein geführten Leitungen kann sich im Bereich der Durchführung durch die Naht in der Trennebene der Schalen und vorzugsweise etwa quer zum Verlauf der Naht erstrecken.

Die Wandung des Behälters kann aus einem mehrschichtigen Extrudat mit wenigstens einer Barriereschicht für Kohlenwasserstoffe bestehen.

Bei einer vorteilhaften Ausgestaltung des Kraftstoffbehälters nach der Erfindung ist vorgesehen, dass zumindest eine Leitung an ein die Naht des Kraftstoffbehälters durchsetzendes Einlegeteil angeschlossen ist, das zumindest teilweise aus Kunststoff besteht und das mit dem Kunststoff des Behälters in der Naht verschweißt ist.

Das Einlegeteil kann beispielsweise bei der Verbindung der Schalen des Behälters zwischen die umlaufenden Ränder der Schalen eingelegt und mit diesen verschweißt worden sein.

Bevorzugt ist das Einlegeteil als Steckverbinder ausgebildet.

Die Erfindung wird nachstehend anhand eines in den Zeichnungen dargestellten Ausführungsbeispiels erläutert.

Es zeigen:
- Figur 1: eine schematische und stark vereinfachte Ansicht eines Kraftstoffbehälters gemäß der Erfindung nach einem ersten Ausführungsbeispiel und
- Figur 2: eine stark vereinfachte schematische Ansicht, teilweise im Schnitt, eines Kraftstoffbehälters nach einem zweiten Ausführungsbeispiel der Erfindung und
- Figur 3: eine Schnittansicht durch die Wandung des Kraftstoffbehälters und ein die Wandung in dem Bereich durchsetzendes Anschlusselement.

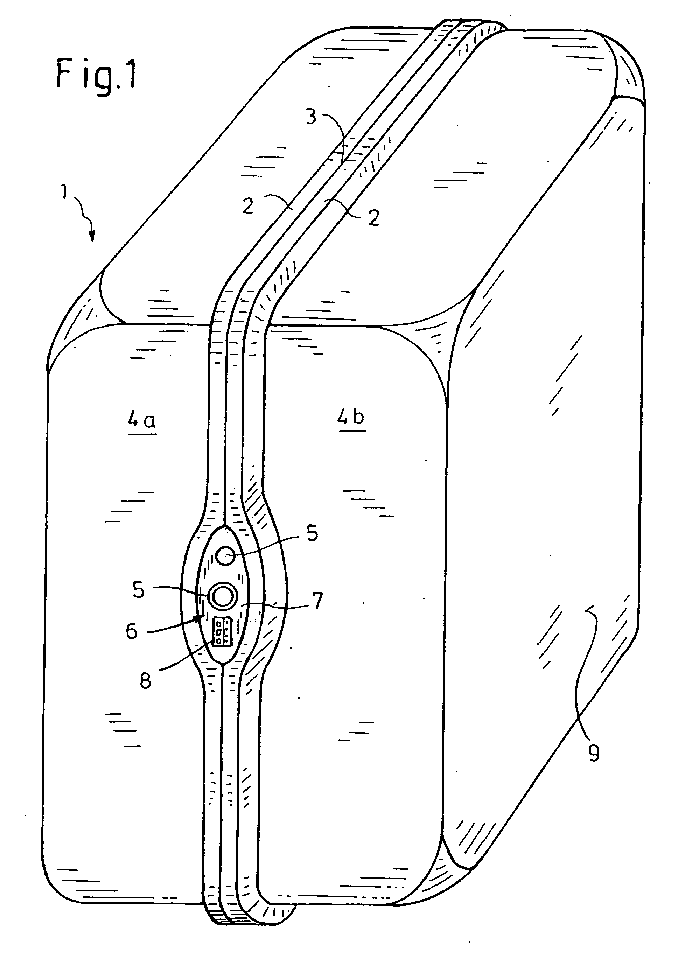

In Figur 1 ist der Kraftstoffbehälter 1 gemäß der Erfindung stark vereinfacht dargestellt, so ist die an dem Kraftstoffbehälter 1 üblicherweise vorgesehene Einfüllöffnung mit einem daran angeordneten Einfüllstutzen dargestellt. Der Kraftstoffbehälter 1 wurde durch Extrusionsblasformen von zwei bahnförmigen Extrudaten in einem mehrstufigen Formgebungsprozess hergestellt, und zwar unter Verwendung eines dreiteiligen Werkzeugs mit zwei Außenformen und einer Mittelform. Dabei wurden zunächst zwei bahnförmige Extrudate in der ersten Hitze, d. h. in noch plastischem Zustand und ohne weitere Erwärmung zwischen den Außenformen und der Mittelform platziert. Die Außenformen weisen jeweils Teilkavitäten auf, die der späteren Außenkontur des fertigen Kraftstoffbehälters entsprechen. In einem Schritt werden die Außenformen gegen die Mittelform geschlossen, wobei jeweils die Vorformlinge zwischen den Außenformen und der Mittelform angeordnet sind. Sodann werden die Vorformlinge innerhalb der Form aufgeweitet und an die Innenflächen der Teilkavitäten der Außenform angelegt. Über in der Mittenform angeordnete Bauteilhalter werden innerhalb der so gefertigten Halbschalen des Behälters die Funktionsbauteile, die zum Betrieb eines Kraftstoffbehälters erforderlich sind, angeordnet. Sodann werden die Außenformen auseinandergefahren, die Mittelform wird zwischen den Außenformen weggefahren und die Außenformen werden gegeneinandergefahren, so dass die Halbschalen des Kraftstoffbehälters im Bereich ihrer flanschartig umlaufenden Ränder 2 miteinander verschweißen.

Die Halbschalen des Kraftstoffbehälters 1 sind aus einem sechsschichtigen Koextrudat mit einer in dieses eingebetteten Barriereschicht für Kohlenwasserstoffe ausgebildet.

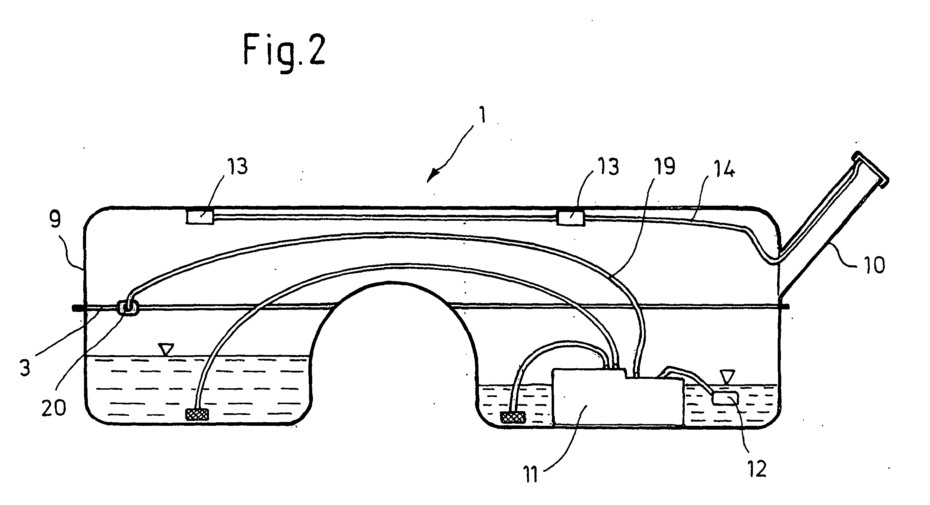

Wie dies aus Figur 1 ersichtlich ist, besitzt der Kraftstoffbehälter 1 eine umlaufende Naht 3, an der die flanschartig ausgebildeten Ränder 2 der Halbschalen 4a, 4b des Kraftstoffbehälters 1 miteinander verschweißt sind. Der Kraftstoffbehälter 1 ist weiterhin mit einem Einfüllrohr 10 versehen, welches in Figur 2 stark vereinfacht dargestellt ist. Ebenso ist die Geometrie des Kraftstoffbehälters 1 in den Figuren stark vereinfacht. Es ist für den Fachmann selbstverständlich, dass der Kraftstoffbehälter 1 eine verhältnismäßig zerklüftete und komplexe Außenstruktur aufweisen kann, beispielsweise kann der Kraftstoffbehälter 1 als Satteltank ausgebildet sein, der zwei Hauptvolumina bildend in seinem mittleren Bereich eingezogen ist. Der eingezogene Bereich wird üblicherweise in Einbaulage des Kraftstoffbehälters über der Kardanwelle eine Kfz angeordnet sein.

An dem Kraftstoffbehälter 1 sind in erfindungsgemäßer Art und Weise mehrere Durchführungen 5 vorgesehen, die die Naht 3 des Kraftstoffbehälters 1 so durchsetzen, dass diese eine Schnittstelle des Kraftstoffbehälters 1 bilden. Diese Durchführungen 5 sind in einer als Einlegeteil ausgebildeten Multifunktionskupplung 6 angeordnet. Die Multifunktionskupplung 6 besitzt einen Grundkörper 7 aus thermoplastischem Kunststoff, der bei dem dargestellten Ausführungsbeispiel insgesamt zwei Durchführungen 5 und einen elektrischen Steckkontakt 8 aufweist. Die größere der Durchführungen 5 kann beispielsweise für eine Entlüftungsleitung vorgesehen sein, wohingegen die kleinere der Durchführungen 5 für eine Kraftstoffentnahmeleitung vorgesehen sein kann. Die Steckkontakte 8 können beispielsweise der elektrischen Versorgung einer in Figur 2 dargestellten Kraftstofffördereinheit 11 dienen und darüber hinaus kann das Signal eine Füllstandsgebers 12 über die Steckkontakte 8 abgegriffen werden.

Bei dem in Figur 2 dargestellten Ausführungsbeispiel stellen die in der Naht 3 des Kraftstoffbehälters 1 vorgesehenen Durchführungen 5 die einzige Schnittstelle des Kraftstoffbehälters 1 nach außen dar. Ausgenommen hiervon ist selbstverständlich das Einfüllrohr 10, über das eine Befüllung des Kraftstoffbehälters 1 erfolgen muss. Mit Ausnahme der für das Einfüllrohr 10 vorgesehenen Öffnung in dem Kraftstoffbehälter 1 ist die Wandung 9 des Kraftstoffbehälters 1 unverletzt, d.h. es sind keine weiteren Durchbrüche vorgesehen. Die in dem Kraftstoffbehälter 1 vorgesehenen Einbauten in Form einer Kraftstofffördereinheit oder anderer Funktionsbauteile sind auf Lebensdauer des Kraftstoffbehälters 1 ausgelegt, bei deren Versagen ist der ganze Kraftstoffbehälter 1 auszutauschen.

Bei der in Figur 2 dargestellten Variante des Kraftstoffbehälters 1 sind in dessen Ausgleichsvolumen, d. h. an den in Einbaulage höchsten Stellen des Kraftstoffbehälters 1 Entlüftungsventile 13 vorgesehen, die über eine Entlüftungsleitung 14 miteinander verbunden sind. Diese Entlüftungsventile 13 können in an sich bekannter Art und Weise auch zusätzlich mit sogenannten Roll-over-Ventilen versehen sein, die schwerkraftbetätigt die Entlüftungsleitung 14 schließen. Die Entlüftungsleitung 14, die beispielsweise als Betankungsentlüftungsleitung ausgebildet sein kann, ist durch das Einfüllrohr 10 nach außen geführt. Mit 19 ist eine elektrische Leitung bezeichnet, die bei 20 unmittelbar durch die Naht 3 des Behälters nach außen geführt ist. Alternativ hierzu können selbstverständlich auch elektrische Leitungen durch das Einfüllrohr 10 geführt sein.

Der Kraftstoffbehälter 1 gemäß der Erfindung besitzt keine Revisionsöffnung, durch Bauteile im Inneren des Kraftstoffbehälters 1 zugänglich wären.

Es ist für den Fachmann ersichtlich, dass anstelle der Multifunktionskupplung 6 entsprechende Leitungen unmittelbar durch die Naht des Kraftstoffbehälters 1 hindurchgeführt werden können.

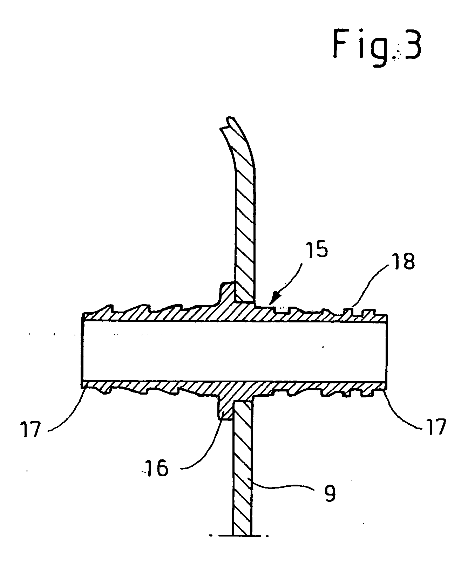

Bei der in Figur 3 gezeigten Variante des Kraftstoffbehälters 1 gemäß der Erfindung ist vorgesehen, dass für den Anschluss einer oder mehrerer Fluidleitungen eines oder mehrere Anschlusselemente 15 vorgesehen sind, die beispielsweise als Doppelnippel ausgebildet sind und beiderseits eines umlaufenden Kragens 16 jeweils einen Zapfen 17 mit einem Tannenbaumprofil 18 aufweisen. Die Zapfen dienen zum Aufwürgen und Befestigen von Fluidleitungen. Das Anschlusselement 15 wurde bei der Ausformung des Kraftstoffbehälters 1 innerhalb des Werkzeugs von dem Anschlusselement 15 durchdrungen. Dabei wurde das Anschlusselement mittels eines hierfür vorgesehenen Manipulators durch die Wandung 9 des Kraftstoffbehälters 1 in eine im Werkzeug vorgesehene Matrize hindurchgestoßen. Im Bereich des umlaufenden Kragens 16 ist das Anschlusselement 15 mit der Wandung 9 des Kraftstoffbehälters verschweißt. Die durch das Anschlusselement 15 in der Wandung 9 des Kraftstoffbehälters 1 gebahnte Öffnung besitzt einen Durchmesser, der nur geringfügig größer als der Durchmesser des Anschlusselements 15 bzw. als der Durchmesser der auf dieses aufzusteckenden Fluidleitungen ist.

### Bezugszeichenliste

- 1: Kraftstoffbehälter
- 2: Ränder
- 3: Naht
- 4a,b: Halbschalen
- 5: Durchführungen
- 6: Multifunktionskupplungen
- 7: Grundkörper
- 8: elektrischer Steckkontakt
- 9: Wandung
- 10: Einfüllrohr
- 11: Kraftstofffördereinheit
- 12: Füllstandsgeber
- 13: Entlüftungsventile
- 14: Entlüftungsleitung
- 15: Anschlusselement
- 16: Kragen
- 17: Zapfen
- 18: Tannenbaumprofil
- 19: elektrische Leitung
- 20: Durchführung durch die Naht des Behälters

## Patentansprüche

1. Kraftstoffbehälter (1) mit wenigstens einer umlaufenden Naht (3) mit einer Einfüllöffnung, mit Mitteln zur Be- und Entlüftung und mit Mitteln zur Förderung und Entnahme von Kraftstoff in Form wenigstens einer innerhalb des Kraftstoffbehälters (1) angeordneten Kraftstofffördereinheit (11), mit in den Kraftstoffbehälter (1) hinein und/oder aus diesem hinaus geführten Fluidleitungen und/oder elektrischen Leitungen, wobei keine Öffnung und/oder kein Durchbruch in der Wandung (9) des Kraftstoffbehälters vorgesehen ist, deren Durchmesser wesentlich größer als der Durchmesser der betreffenden Leitung ist, **dadurch gekennzeichnet, dass** der Kraftstoffbehälter (1) aus thermoplastischem Kunststoff besteht, und dass wenigstens eine der aus dem Kraftstoffbehälter (1) hinaus oder in diesen hinein geführte Fluidleitungen und/oder elektrischen Leitungen die Naht (3) des Kraftstoffbehälters (1) sich in einem Winkel zum Verlauf der Naht (3) erstreckend durchsetzt.

2. Kraftstoffbehälter nach Anspruch 1, **dadurch gekennzeichnet, dass** wenigstens eine der Fluidleitungen an ein die Wandung (9) des Kraftstoffbehälters (1) unmittelbar durchsetzendes Anschlusselement (15) angeschlossen ist.

3. Kraftstoffbehälter nach einem der Ansprüche 1 bis 2, **dadurch gekennzeichnet, dass** wenigstens eine der aus dem Kraftstoffbehälter (1) hinaus oder in diesen hinein geführten Fluidleitungen und/oder elektrischen Leitungen sich zumindest teilweise durch die Einfüllöffnung und ggf. einen sich an die Einfüllöffnung anschließenden Einfüllstutzen geführt sind.

4. Kraftstoffbehälter nach einem der Ansprüche 1 bis 3, **dadurch gekennzeichnet, dass** keine Revisionsöffnung vorgesehen ist und die in dem Kraftstoffbehälter (1) vorgesehenen Funktionseinbauten auf die gesamte Lebensdauer des Kraftstoffbehälters (1) ausgelegt sind.

5. Kraftstoffbehälter nach einem der Ansprüche 1 bis 4, **dadurch gekennzeichnet, dass** genau drei Fluidleitungen in den Kraftstoffbehälter (1) hinein oder aus diesem hinaus geführt sind.

6. Kraftstoffbehälter nach Anspruch 5, **dadurch gekennzeichnet, dass** genau eine Einfüllöffnung, genau eine Entlüftungsleitung und genau eine Kraftstoffentnahmeleitung vorgesehen sind.

7. Kraftstoffbehälter nach einem der Ansprüche 1 bis 6, **dadurch gekennzeichnet, dass** dieser wenigstens aus zwei Schalen (4a,b) zusanmengesetzt ist, die jeweils im Bereich der Naht (3) einen flanschartigen Rand (2) ausbilden.

8. Kraftstoffbehälter nach Anspruch 7, **dadurch gekennzeichnet, dass** wenigstens eine der aus dem Kraftstoffbehälter (1) hinaus oder in diesen hinein geführten Leitungen sich im Bereich der Durchführung durch die Naht (3) in der Trennebene der Schalen (4a,b) und vorzugsweise etwa quer zum Verlauf der Naht (3) erstreckt.

9. Kraftstoffbehälter nach einem der Ansprüche 1 bis 8, **dadurch gekennzeichnet, dass** die Wandung (9) des Behälters aus einem mehrschichtigen Extrudat mit wenigstens einer Barriereschicht für Kohlenwasserstoffe besteht.

10. Kraftstoffbehälter nach einem der Ansprüche 1 bis 9, **dadurch gekennzeichnet, dass** zumindest eine Leitung an ein die Naht (3) des Kraftstoffbehälters (1) durchsetzendes Einlegeteil angeschlossen ist, das zumindest teilweise aus Kunststoff besteht und das mit dem Kunststoff des Behälters in der Naht (3) verschweißt ist.

11. Kraftstoffbehälter nach einem der Ansprüche 5 bis 10, **dadurch gekennzeichnet, dass** das Einlegeteil bei der Verbindung der Schalen (4 a,b) des Behälters zwischen die umlaufenden Ränder der Schalen (4 a,b) eingelegt und mit diesen verschweißt wurde.

12. Kraftstoffbehälter nach einem der Ansprüche 10 oder 11, **dadurch gekennzeichnet, dass** das Einlegeteil als Steckverbinder ausgebildet ist.

## Claims

1. A fuel tank (1) having at least one circumferential seam (3) having a filling opening, having means for aeration and deaeration and having means for supplying and extracting fuel in the form of at least one fuel-supply unit (11) arranged within the fuel tank (1), having fluid lines and/or electrical lines guided into and/or out of the fuel tank (1), wherein the wall (9) of the fuel tank is not provided with any opening and/or gap whereof the diameter is substantially greater than the diameter of the relevant line, **characterised in that** the fuel tank (1) is made of thermoplastic plastics material and **in that** at least one of the fluid lines and/or electrical lines guided out of or into the fuel tank (1) passes through the seam (3) of the fuel tank (1), extending at an angle to the course of the seam (3).

2. A fuel tank according to Claim 1, **characterised in that** at least one of the fluid lines is connected to a connecting element (15) passing directly through the wall (9) of the fuel tank (1).

3. A fuel tank according to one of Claims 1 and 2, **characterised in that** at least one of the fluid lines and/or electrical lines guided out of or into the fuel tank (1) are guided at least partially through the filling opening and possibly a filling neck adjoining the filling opening.

4. A fuel tank according to one of Claims 1 to 3, **characterised in that** an inspection opening is not provided and the functional installations provided in the fuel tank (1) are designed for the entire service life of the fuel tank (1).

5. A fuel tank according to one of Claims 1 to 4, **characterised in that** precisely three fluid lines are guided into or out of the fuel tank (1).

6. A fuel tank according to Claim 5, **characterised in that** precisely one filling opening, precisely one deaeration line and precisely one fuel extraction line are provided.

7. A fuel tank according to one of Claims 1 to 6, **characterised in that** this is composed at least of two shells (4a,b) which each form a flange-like edge (2) in the region of the seam (3).

8. A fuel tank according to Claim 7, **characterised in that** at least one of the lines guided out of or into the fuel tank (1) extends in the region of the feed-through through the seam (3) in the separating plane of the shells (4a,b) and preferably approximately transversely to the course of the seam (3).

9. A fuel tank according to one of Claims 1 to 8, **characterised in that** the wall (9) of the tank is made of a multi-layer extruded material with at least one barrier layer for hydrocarbons.

10. A fuel tank according to one of Claims 1 to 9, **characterised in that** at least one line is connected to an insert part, which passes through the seam (3) of the fuel tank (1), is made at least partially of plastics material and is welded to the plastics material of the tank in the seam (3).

11. A fuel tank according to one of Claims 5 to 10, **characterised in that** the insert part was inserted between the circumferential edges of the shells (4 a,b) and welded thereto during connection of the shells (4 a,b).

12. A fuel tank according to one of Claims 10 and 11, **characterised in that** the insert part is constructed as a plug-type connector.

## Revendications

1. Réservoir de carburant (1), comportant au moins un joint (3) périphérique avec une ouverture de remplissage, comportant des moyens pour la ventilation et la purge d'air et comportant des moyens pour transporter et prélever le carburant sous la forme d'au moins une unité de transport du carburant (11), agencée à l'intérieur du réservoir de carburant (1), comportant des conduites de fluide et/ou des lignes électriques guidées vers l'intérieur du réservoir de carburant (1) et/ou hors de celui-ci, aucune ouverture et/ou aucun passage traversant, dont le diamètre serait nettement supérieur au diamètre de la conduite ou ligne concernée, n'étant prévu dans la paroi (9) du réservoir de carburant, **caractérisé en ce que** le réservoir de carburant (1) est réalisé dans un matériau thermoplastique et **en ce qu'**au moins une des conduites de fluide et/ou des lignes électriques guidées vers l'intérieur du réservoir de carburant (1) et/ou hors de celui-ci traverse le joint (3) du réservoir de carburant (1) en formant un angle avec le tracé du joint (3).

2. Réservoir de carburant selon la revendication 1, **caractérisé en ce qu'**au moins une des conduites de fluide est raccordée à un élément de raccord (15) traversant directement la paroi (9) du réservoir de carburant (1).

3. Réservoir de carburant selon l'une quelconque des revendications 1 à 2, **caractérisé en ce qu'**au moins une des conduites de fluide et/ou des lignes électriques guidées vers l'intérieur du réservoir de carburant (1) et/ou hors de celui-ci sont guidées au moins en partie à travers l'ouverture de remplissage et, le cas échéant, à travers une tubulure de remplissage raccordée à l'ouverture de remplissage.

4. Réservoir de carburant selon l'une quelconque des revendications 1 à 3, **caractérisé en ce qu'**il n'est prévu aucune ouverture de maintenance et les inserts fonctionnels, prévus à l'intérieur du réservoir de carburant (1), sont conçus en étant ajustés à la durée de vie du réservoir de carburant (1).

5. Réservoir de carburant selon l'une quelconque des revendications 1 à 4, **caractérisé en ce que** exactement trois conduites de fluide sont guidées vers l'intérieur du réservoir de carburant (1) et/ou hors de celui-ci.

6. Réservoir de carburant selon la revendication 5, **caractérisé en ce que** exactement une ouverture de remplissage, exactement une conduite de purge d'air et exactement une conduite de prélèvement du carburant sont prévues.

7. Réservoir de carburant selon l'une quelconque des revendications 1 à 6, **caractérisé en ce que** celui-ci est constitué d'au moins deux coques (4a, b), qui forment chacune un bord (2) en forme de bride dans la zone du joint (3).

8. Réservoir de carburant selon la revendication 7, **caractérisé en ce qu'**au moins une des conduites ou lignes guidées vers l'intérieur du réservoir de carburant (1) et/ou hors de celui-ci passent, dans la zone du passage traversant, à travers le joint (3) dans le plan de joint des coques (4a, b) et de préférence sensiblement transversalement au tracé du joint (3).

9. Réservoir de carburant selon l'une quelconque des revendications 1 à 8, **caractérisé en ce que** la paroi (9) du réservoir est réalisée dans un produit extrudé multicouche avec au moins une couche formant barrière aux hydrocarbures.

10. Réservoir de carburant selon l'une quelconque des revendications 1 à 9, **caractérisé en ce qu'**au moins une conduite est raccordée à un élément à insérer, qui traverse le joint (3) du réservoir de carburant (1) et qui est soudé à la matière plastique du réservoir dans le joint (3).

11. Réservoir de carburant selon l'une quelconque des revendications 5 à 10, **caractérisé en ce qu'**au moment de l'assemblage des coques (4a, b) du réservoir, l'élément à insérer est inséré entre les bords périphériques desdites coques (4a, b) et est soudé à celles-ci.

12. Réservoir de carburant selon la revendication 10 ou 11, **caractérisé en ce que** l'élément à insérer est réalisé sous la forme d'un connecteur à fiches.
